# EUROPÄISCHE PATENTANMELDUNG

(11) **EP 1 313 010 A1**
(43) Veröffentlichungstag der Anmeldung: **21.05.2003**
(21) Anmeldenummer: 01127591.4
(22) Anmeldetag: 19.11.2001
(51) Int. Cl.: G06F 9/445, G06F 9/45

(54) **Verfahren zum Übermitteln eines Programms, zugehöriges Programm und zugehörige Vorrichtung**

(71) Anmelder: SIEMENS AKTIENGESELLSCHAFT, 80333 München (DE)
(72) Erfinder: Prehofer, Christian, Dr., 81477 München (DE)

(57) **Zusammenfassung**

Erläutert wird unter anderem ein Verfahren, bei dem ein Diensterbringungsrechner (14) Zugriff auf die Quelltexte eines Programms hat. Ein Nutzer (TlnA) stellt an den Diensterbringungsrechner (14) eine Auswahlanforderung (50) zur Auswahl eines Leistungsmerkmals des Programms. Der Diensterbringungsrechner (14) wandelt den Quelltext abhängig von der Auswahlanforderung (50) in ein nutzerspezifisches Programm um (t2, t4) und überträgt das nutzerspezifische Programm zum Gerät (10) des Nutzers (TlnA).

## Beschreibung

Die Erfindung betrifft ein Verfahren zum Übermitteln eines Programms an einen Nutzer. Programme werden üblicherweise in einer im Vergleich zu einem Maschinenprogramm oder zu einem Zwischenprogramm höheren Programmiersprache geschrieben, wobei der Programmierer in Textform ein sogenanntes Quellprogramm erstellt. Beispiele für Quellprogramme sind Programme in einer Assemblersprache, in einer Kompiliersprache bzw. Compilersprache, in einer Interpretersprache oder in einer Seitenbeschreibungssprache.

Dem Nutzer, der das Programm nicht selbst programmiert hat, wird üblicherweise nicht der Quelltext, sondern ein aus dem Quelltext erzeugtes Maschinenprogramm übermittelt, das Befehle eines prozessortypabhängigen Befehlssatzes enthält. Alternativ wird jedoch zunehmend aus dem Quellcode ein Zwischencode erzeugt, der keine Befehle der ursprünglich zur Erstellung des Quellcodes verwendeten Programmiersprache enthält und andererseits auch noch kein Maschinenprogramm ist, das durch einen bestimmten Prozessor direkt ausführbar ist. So wird bei der im Internet genutzten Programmiersprache JAVA das Zwischenprogramm in einem Zwischencode erzeugt, einem sogenannten Bytecode. Befehle des Zwischenprogramms müssen erst noch mit Hilfe eines Übersetzers in prozessortypabhängige Maschinenbefehle umgewandelt werden.

Das Programm ist beispielsweise ein Anwendungsprogramm, das für einen bestimmten Anwendungsbereich konzipiert ist, z.B. ein Textprogramm zur Bearbeitung von Texten, ein Spielprogramm oder ein Terminkalenderprogramm. Das Programm kann aber auch ein Betriebssystem sein, das die Grundfunktionen eines elektrischen Gerätes erst ermöglicht, z.B. die Funktionen einer Datenverarbeitungsanlage oder eines mobilen Endgerätes für ein Mobilfunk-Datenübertragungsnetz.

Allgemein bekannt sind Verfahren, bei denen der gesamte Quelltext und/oder ein aus dem gesamten Quelltext erzeugtes Maschinenprogramm an den Nutzer übermittelt werden, beispielsweise auf einer Diskette, einer Kompaktdiskette oder über ein Datenübertragungsnetz. Wird nur das Maschinenprogramm oder ein Zwischenprogramm übermittelt, so kann der Nutzer das Programm selbst nicht ohne weiteres weiterentwickeln.

Es ist Aufgabe der Erfindung, zum Übermitteln eines Programms ein verbessertes Verfahren anzugeben, das insbesondere einfach und benutzerfreundlich ist. Außerdem sollen ein zugehöriges Programm und eine zugehörige Vorrichtung angegeben werden.

Die auf das Verfahren bezogene Aufgabe wird durch die im Patentanspruch 1 angegebenen Verfahrensschritte gelöst. Weiterbildungen sind in den Unteransprüchen angegeben.

Die Erfindung geht einerseits von der Erkenntnis aus, dass die Übermittlung des vollständigen Quelltextes bzw. des vollständigen Programms oft nicht erforderlich ist, weil der Nutzer entweder nur einen Teil der zur Verfügung gestellten Leistungsmerkmale nutzen will oder aufgrund des Aufbaus seines Endgerätes nutzen kann. Andererseits geht die Erfindung von der Überlegung aus, dass das manuelle Auswählen von Quelltexten und/oder Maschinenprogrammmodulen bzw. Zwischenprogrammmodulen Spezialwissen erfordert, das der Hauptteil der Nutzer nicht hat, so dass die manuelle Auswahl von Teilen des Quelltextes nicht benutzerfreundlich ist. Weiterhin beruht die Erfindung auf der Überlegung, dass sich eine solche Auswahl dennoch am besten auf der Ebene des Quelltextes treffen lässt.

Deshalb hat beim erfindungsgemäßen Verfahren ein Diensterbringungsrechner Zugriff zu dem Quelltext mindestens eines Programms. Ein Nutzer, der das Programm nutzen möchte, stellt an den Diensterbringungsrechner eine Übermittlungsanforderung zur Übermittlung des Programms. Außerdem wird vom Nutzer zum Diensterbringungsrechner mindestens eine Auswahlanforderung zur Auswahl eines Leistungsmerkmals des Programms und/oder zur Auswahl eines einzelnen Programmmoduls und/oder mindestens einer Geräteangabe zu dem Gerät übermittelt, mit dessen Hilfe der Nutzer das Programm ausführt. Der Diensterbringungsrechner wandelt dann vorzugsweise automatisch den Quelltext abhängig von der Auswahlanforderung und/oder der Gerätangabe in ein nutzerspezifisches Programm um, das keinen Quelltext mehr enthält. Alternativ veranlasst der Diensterbringungsrechner diese Umwandlung, d.h. er führt die Umwandlung nicht selbst aus. Das bei der Umwandlung erzeugte nutzerspezifische Programm wird anschließend zum Gerät des Nutzers übermittelt, beispielsweise über ein Datenübertragungsnetz oder auf einem Datenträger.

Das erfindungsgemäße Verfahren ist benutzerfreundlich, weil der Nutzer nur die Auswahlanforderung stellt bzw. die Geräteangabe angibt. Die Zuordnung zu Teilen des Quelltextes und die Umwandlung erfolgen dann abhängig von diesen Angaben und abhängig von den Quelltexten automatisch, ohne dass der Nutzer Spezialwissen besitzen muss.

Dadurch, dass das nutzerspezifische Programm für jeden Nutzer einzeln aus dem Quelltext erzeugt wird, lassen sich eine Vielzahl von verschiedenen Versionen des nutzerspezifischen Programms ausgehend von demselben Quelltext erzeugen. Beispielsweise lassen sich mehrere hundert, mehrere tausend oder mehrere zehntausend verschiedene Versionen realisieren.

Bei einer Weiterbildung des erfindungsgemäßen Verfahrens enthält der Quelltext mindestens eine Auswahlanweisung, die abhängig vom Wert einer Auswahlvariablen eine erste Variante des Quelltextes und mindestens eine weitere Variante des Quelltextes angibt, wobei entweder die erste Variante oder die weitere Variante gültig und die jeweils andere Variante ungültig ist. Abhängig von der Auswahlanforderung oder der Geräteangabe wird ein Wert für die Auswahlvariable festgelegt. Beim Umwandeln werden dann nur für den gültigen Teil des Quelltextes Programmbefehle des nutzerspezifischen Programms erzeugt. Für einen ungültigen Teil des Quelltextes werden dagegen keine Programmbefehle des nutzerspezifischen Programms erzeugt.

Diese Vorgehensweise ist eine einfache Möglichkeit, um überflüssige Teile des Quelltextes, d.h. nicht benötigte Teile des Quelltextes, bei der Umwandlung zu übergehen. Jedoch bietet die Auswahlanweisung auch die Möglichkeit, auf einfache Art bestimmte Optionen für den Benutzer freizuschalten oder zu sperren. Für gesperrte Optionen müssten dann beispielsweise keine Bibliotheksmodule an den Nutzer übermittelt werden.

Durch die Auswahl ist es möglich, den Programmcode beispielsweise um mehrere KByte (Kilobyte) im Vergleich zu einer Umwandlung ohne Auswahl zu kürzen. Die Auswahl ist also insbesondere dann besonders wichtig, wenn die Speicherkapazität des Gerätes begrenzt ist, mit dessen Hilfe der Nutzer das nutzerspezifische Programm ausführt, beispielsweise bei sogenannten Handies oder tragbaren Computern, die auf einer Handfläche Platz finden.

Außerdem wird aufgrund der Einsparung mehrerer Kilobyte die Übermittlung an den Nutzer einfacher. So müssen bei der Übermittlung über ein Datenübertragungsnetz die Netzressourcen nur für eine kürzere Zeit beansprucht werden. Bei der Übermittlung mit einem Datenträger lässt sich ein Datenträger mit einer geringeren Speicherkapazität verwenden.

Bei einer anderen Weiterbildung des erfindungsgemäßen Verfahrens enthält der Quelltext für eine Auswahlmöglichkeit oder für eine Geräteangabe eine einzige Auswahlanweisung. Durch die Auswahl werden also nur aufeinanderfolgende Zeilen des Quelltextes betroffen. Außerdem gibt es nur eine Stelle, welche durch die Auswahlmöglichkeiten betroffen ist. Dadurch werden Änderungen der Auswahlmöglichkeiten erleichtert. Die Weiterbildung wird insbesondere dann eingesetzt, wenn durch die Auswahlmöglichkeit beispielsweise ein bestimmtes Modul einbezogen werden oder ausgeschlossen werden soll.

Bei einer nächsten Weiterbildung betrifft dieses Modul, das abhängig von der Art der Auswahlvariablen ausgewählt oder ausgeblendet wird, ein Verschlüsselungsverfahren, ein Protokoll zum Übertragen von Nachrichten oder ein Datenformat für Nachrichten.

Bei einer alternativen Weiterbildung enthält der Quelltext für eine Auswahlmöglichkeit oder für eine Geräteangabe mehrere Auswahlanweisungen. Die Auswahlanweisungen treten beispielsweise in verschiedenen Quelltextdateien und/oder an verschiedenen Stellen eines Quelltextes auf. Zwischen den einzelnen Auswahlanweisungen befinden sich Quelltextzeilen, welche durch die Auswahl nicht betroffen sind. Durch diese Maßnahme lassen sich insbesondere Auswahlmöglichkeiten schaffen, die spezielle elektronische bzw. schaltungstechnische Voraussetzungen des Gerätes betreffen, welches das nutzerspezifische Programm ausführen soll.

Bei einer Weiterbildung mit mehreren Auswahlanweisungen betrifft der Wert der Auswahlvariablen eine Gerätekomponente des Gerätes, beispielsweise eine Anzeigeeinheit, wie ein LC-Display (Liquid Cristal Display), oder eine Softwarekomponente, z.B. einen Zeichensatz. So lässt sich beispielsweise auf einfache Art und Weise zwischen einem Schwarz-Weiß-Display und einem Farb-Display unterscheiden. Das nutzerspezifische Programm für die Schwarz-Weiß-Variante wird erheblich kürzer, wenn für die Schwarz-Weiß-Darstellung einfachere Funktionsaufrufe verwendet werden, als für die Farb-Darstellung. Der kürzere Funktionsaufruf wirkt sich um so mehr auf die Länge des nutzerspezifischen Programms aus, je öfter die Funktion im gesamten Programm aufgerufen wird. Außerdem lässt sich beispielsweise eine Funktion für eine Schwarz-Weiß-Variante mit weniger Befehlen realisieren als eine Version für eine Farb-Variante. Dadurch wird das nutzerspezifische Programm nochmals verkürzt, falls die Schwarz-Weiß-Komponente ausgewählt wird. Die gleichen Wirkungen treten jedoch auch bei anderen Auswahlfunktionen auf, so lange der Nutzer nicht überall die am aufwendigsten zu programmierenden Funktionen auswählt, die üblicherweise auch den längsten Funktionsaufruf haben.

Bei einer nächsten Weiterbildung des erfindungsgemäßen Verfahrens wird abhängig von der Auswahlanweisung und/oder der Auswahlanforderung mindestens ein Programmmodul des nutzerspezifischen Programms zum Nutzer übertragen. Abhängig von derselben Auswahlanforderung bzw. Auswahlanweisung wird mindestens ein alternativ zu dem übertragenen Programmmodul des nutzerspezifischen Programms zu verwendendes Programmmodul nicht übertragen. Beispielsweise sind die Programmmodule sogenannte Bibliotheken, in denen sich Programmteile für Funktionen befinden, die von verschiedenen Stellen des Hauptprogramms aus aufgerufen werden. Die Weiterbildung lässt sich insbesondere dann vorteilhaft einsetzen, wenn bestimmte Optionen für den Benutzer im nutzerspezifischen Programm bereits freigeschaltet sind und andere Funktionen für den Benutzer gesperrt werden. Es werden nur die Programmmodule mitgegeben, deren Funktionen vom Nutzer noch aufrufbar sind bzw. die beim Erbringen der ausgewählten Funktion aufgerufen werden. Für die gesperrten Funktionen eigentlich erforderlichen Programmodule bzw. die durch die gesperrten Funktionen betroffenen Programmmodule werden nicht übermittelt. Durch diese Maßnahme wird die Menge der zu übermittelnden Daten erheblich verringert.

Bei einer nächsten Weiterbildung, die insbesondere im Zusammenhang mit der Auswahl von Programmmodulen eingesetzt wird, enthält das nutzerspezifische Programm mindestens ein Programmmodul, das eine Sammlung von Programmfunktionen enthält. Solche Sammlungen werden auch als Programmbibliotheken bezeichenet. Das Programmmodul wird auf der Seite des Diensterbringungsrechners oder im Gerät des Nutzers unter Verwendung einer Verknüpfungseinheit mit dem Hauptteil des nutzerspezifischen Programms verknüpft. Solche Verknüpfungseinheiten sind beispielsweise sogenannte Linker.

Bei einer nächsten Weiterbildung des erfindungsgemäßen Verfahrens ist der Quellcode in einer klassischen Programmiersprache geschrieben, beispielsweise in der Programmiersprache C, C++ oder in der Programmiersprache VisualBasic der Firma Microsoft GmbH. Mit Hilfe eines Compilers wird der Quellcode in das nutzerspezifische Programm übersetzt. Das nutzerspezifische Programm enthält Programmbefehle eines Befehlssatzes, der von dem Typ des Prozessors abhängt, mit dem das nutzerspezifische Programm ausgeführt wird. Bei dieser Weiterbildung ist die Ablaufgeschwindigkeit des nutzerspezifischen Programms auf dem Gerät des Nutzers hoch.

Bei einer alternativen Weiterbildung ist der Quelltext in einer Programmiersprache geschrieben, die eine Umwandlung in einen Zwischencode erlaubt. Das nutzerspezifische Programm enthält Befehle gemäß Zwischencode. Die Befehle gemäß Zwischencode werden erst im Gerät des Nutzers in Maschinenbefehle umgewandelt, die vom Typ des Prozessors abhängen, mit dem die aus dem Zwischencode erzeugten Befehle ausgeführt werden.

Beispiele für Zwischencode sind der sogenannte Bytecode bei Quellcode in der Programmiersprache JAVA, C++ oder der sogenannte Pseudocode bei höheren Versionen der Programmiersprache VisualBasic.

Bei einer anderen Weiterbildung ist das Gerät des Nutzers ein tragbares mobiles Endgerät eines Mobilfunk-Datenübertragungsnetzes, d.h. ein sogenanntes Handy. Alternativ oder kumulativ ist das Gerät ein Computer, der keinen Magnetspeicher besitzt, beispielsweise ein sogenannter PDA (Personal Digital Assistant), ein sogenannter Palmtop oder ein sogenannter Organizer. Bei den genannten Geräten ist der Speicherplatz begrenzt, so dass sich das erfindungsgemäße Verfahren und seine Weiterbildungen besonders wirkungsvoll einsetzen lassen.

Bei einer nächsten Weiterbildung des erfindungsgemäßen Verfahrens wird das nutzerspezifische Programm vor der Übertragung automatisch optimiert, beispielsweise bezüglich Speicherbedarf, Übertragungskosten und Leistungsfähigkeit. Durch die automatische Optimierung wird der Nutzer entlastet und erhält trotzdem ein fachmännisch optimiertes Programm.

Die Erfindung betrifft außerdem ein Programm, das eine Befehlsfolge enthält, bei deren Ausführung durch einen Prozessor das erfindungsgemäße Verfahren oder eine seiner Weiterbildungen ausgeführt wird. Damit gelten die oben genannten technischen Wirkungen auch für das Programm.

Weiterhin betrifft die Erfindung eine Vorrichtung, insbesondere eine Datenverarbeitungsanlage, mit den im Patentanspruch 14 genannten Einheiten, die zur Durchführung des erfindungsgemäßen Verfahrens geeignet sind. Bei einer Weiterbildung des erfindungsgemäßen Verfahrens enthält die Datenverarbeitungsanlage Einheiten, welche die Ausführung der Weiterbildungen des erfindungsgemäßen Verfahrens ermöglichen. Für die Datenverarbeitungsanlage gelten deshalb ebenfalls die oben genannten technischen Wirkungen.

Im Folgenden werden Ausführungsbeispiele der Erfindung an Hand der beiliegenden Zeichnungen erläutert. Darin zeigen:
- Figur 1: Verfahrensschritte zum Erzeugen und Übermitteln eines nutzerspezifischen Programms,
- Figur 2: ein erstes Ausführungsbeispiel mit einer Vielzahl von Auswahlanweisungen für eine Auswahlmöglichkeit,
- Figur 3: ein zweites Ausführungsbeispiel mit einer Auswahlanweisung für eine Auswahlmöglichkeit,
- Figur 4: ein drittes Ausführungsbeispiel mit einer Bibliotheksauswahlfunktion, und
- Figur 5: eine zum Erzeugen und Übermitteln des Quelltextes eingesetzte Einheit.

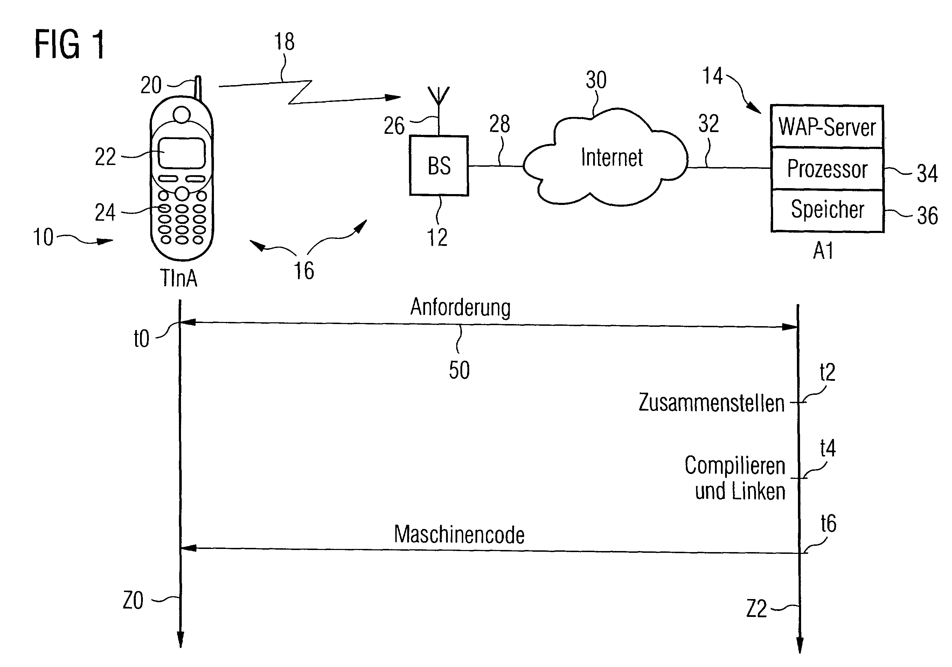

Figur 1 zeigt Verfahrensschritte zum Erzeugen und Übermitteln eines nutzerspezifischen Programms. An der Ausführung der Verfahrensschritte sind ein Endgerät 10, eine Basisstation 12 und ein sogenannter WAP-Server 14 (wireless application protocoll) beteiligt.

Das Endgerät 10 und die Basisstation 12 sind Bestandteile eines Mobilfunk-Datenübertragungsnetzes 16, das beispielsweise gemäß GSM-Standard arbeitet (Global System for Mobile Communication). Zwischen dem Endgerät 10 und der Basisstation 12 besteht eine bidirektional arbeitende Funkübertragungsstrecke 18.

Das Endgerät 10 wird auch als "Handy" bezeichnet und enthält neben einem nicht dargestellten Prozessor und einer nicht dargestellten internen Speichereinheit eine Antenne 20, eine Anzeigeeinheit 22, z.B. ein farbiges oder ein Schwarz-Weiß-LCD (liquid cristal display), sowie eine Eingabeeinheit 24, z.B. eine Tastatur.

Die Basisstation 12 enthält eine Antenne 26 und die bekannten, jedoch in Figur 1 nicht dargestellten, internen Verarbeitungseinheiten. Außerdem ist die Basisstation 12 mit dem Festnetz verbunden, in dem Telefondaten durchschaltevermittelt übertragen werden, nicht dargestellt. Die Basisstation 12 ist über eine Anschlussleitung 28 mit dem Internet 30 verbunden, in dem die Daten gemäß dem Internetprotokoll übertragen werden, d.h. auf unteren Protokollschichten verbindungslos in Datenpaketen und auf oberen Protokollschichten verbindungsorientiert.

Der Server 14 ist über eine Anschlussleitung 32 mit dem Internet 30 verbunden und enthält einen Prozessor 34 sowie eine Speichereinheit 36.

Vorgänge, die sich auf das Endgerät 10 beziehen, werden in Figur 1 mit Hilfe eines Zeitstrahls Z0 dargestellt. Ein Zeitstrahl Z2 dient zur Darstellung der Vorgänge, an denen der Server 14 beteiligt ist, bzw. die der Server 14 ausführt. Frühere Zeitpunkte liegen auf den Zeitstrahlen Z0 und Z2 weiter oben als spätere Zeitpunkte. Gleiche Zeitpunkte liegen auf der gleichen Höhe.

Zu einem Zeitpunkt t0 ruft ein Teilnehmer TlnA im sogenannten world wide web eine WEB-Seite eines Anbieters A1 auf, der unter anderem ein e-Mail-Programm für Handies anbietet. Der Inhalt der WEB-Seite wird vom Server 14 über das Internet 30, die Basisstation 12, die Funkübertragungsstrecke 18 zum Endgerät 10 übertragen und dort auf der Anzeigeeinheit 22 dargestellt. Mit Hilfe der Tastatur 24 stellt der Teilnehmer TlnA eine Anforderung zur Übertragung des e-Mail-Programms. Außerdem spezifiziert der Teilnehmer TlnA mit Hilfe der Tastatur 24 Leistungsmerkmale des e-Mail-Programms, z.B. das gewünschte Übertragungsprotokoll, sowie die Leistungsfähigkeit seines Endgerätes 10, beispielsweise ob das Endgerät 10 eine zur Farbdarstellung geeignete Anzeigeeinheit 22 hat oder von welchem Modelltyp das Endgerät 10 ist. Die vom Teilnehmer TlnA eingegebenen Daten werden als Anforderung 50 unter Verwendung des WAP-Protokolls zum Server 14 übertragen.

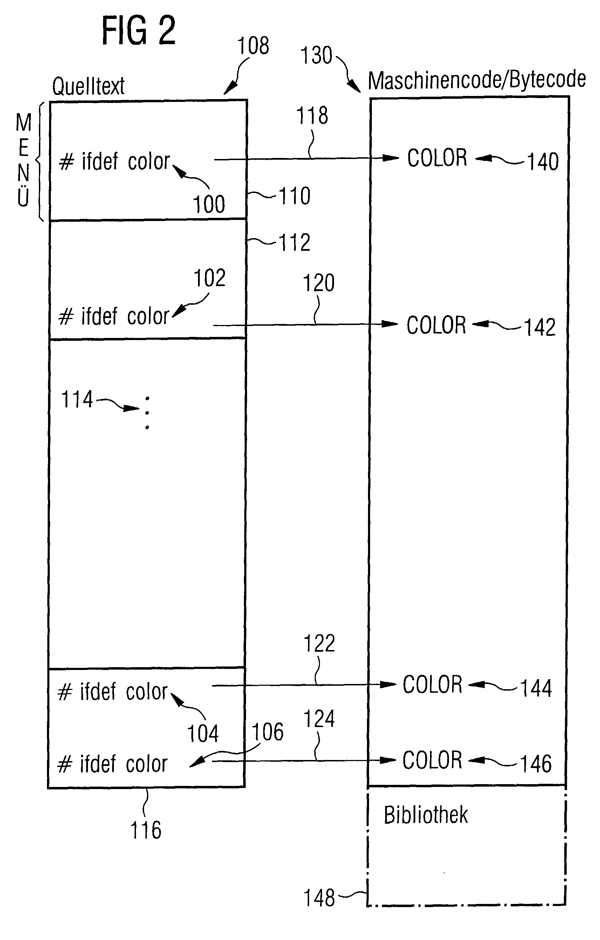

Der Server 14 bearbeitet die Anforderung und belegt abhängig von den Auswahlanforderungen und Geräteangaben Auswahlvariablen mit vorgegebenen Werten, siehe Zeitpunkt t2. Aufgrund der Werte für die Auswahlvariable werden Teile des Quelltextes des e-Mail-Programms ausgewählt und andere Teile ausgeblendet, so dass ein nutzerspezifischer Quelltext zusammengestellt wird. Das Zusammenstellen des Quelltextes wird unten an Hand der Figuren 2 bis 4 noch näher erläutert.

Danach kompiliert der Server 14 den Quelltext unter Berücksichtigung der Werte der Auswahlvariablen. Nach dem Kompilieren werden Bibliotheken zu dem in einem Objektcode vorliegenden Hauptprogramm hinzugelinkt, wobei ein bekanntes Linkverfahren benutzt wird. Es entsteht ein Maschinenprogramm. Das Linken wird ebenfalls unten im Zusammenhang mit der Erläuterung zu den Figuren 2 bis 4 näher erläutert.

Zu einem Zeitpunkt t6 überträgt der Server 14 das in Maschinencode vorliegenden nutzerspezifische e-Mail-Programm über das Internet 30 und das Mobilfunk-Datenübertragungsnetz 16 zum Endgerät 10. Im Endgerät 10 wird das empfangene Programm gespeichert und vom Teilnehmer TlnA zum Versenden von elektronischen Briefen, sogenannten e-Mails, verwendet.

Figur 2 zeigt ein erstes Ausführungsbeispiel, bei dem eine Vielzahl von Auswahlanweisungen 100 bis 106 im Quelltext 108 des e-Mail-Programms enthalten sind. Der Quelltext 108 unterteilt sich in mehrere Quelltextdateien 110 bis 116. Im Ausführungsbeispiel ist der Quelltext in der Programmiersprache C++ geschrieben. Beispielsweise enthält die Quelltextdatei 110 Befehle zum Erzeugen eines Auswahlmenüs, mit dessen Hilfe der Teilnehmer TlnA beispielsweise Übertragungsoptionen auswählen kann.

Die Auswahlanweisungen 100 bis 106 enthalten alle die gleichen Quelltextzeilen, beispielsweise:

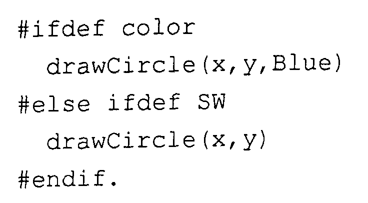

Am Anfang des Quelltextes 108 befindet sich eine Quelltextzeile, in der mit Hilfe der Anweisung:
#define color
der Wert der Variablen color vom Server 14 abhängig von der Art der Anzeigeeinheit 22 des Endgerätes 10 belegt wird. Hat das Endgerät 10 eine zur Farb-Darstellung geeignete Anzeigeeinheit 22, so erhält die Variable color den Wert Eins. Hat das Endgerät 10 dagegen nur eine Schwarz-Weiß-Anzeigeeinheit 22, so wird die Variable color mit dem Wert Null belegt. Vor dem Kompilieren wird ein sogenannter Präprozessor verwendet, um die mit dem Zeichen "#" eingeleiteten Anweisungen des Quelltextes 108 auszuwerten. Hat die Variable color den Wert Eins, so wird für das Kompilieren jeweils nur die Anweisung im sogenannten if-Zweig berücksichtigt, d.h. die Anweisung:
   drawCircle(x,y,Blue).

Diese Selektion wird in Figur 2 durch Pfeile 118 bis 124 angedeutet. Beim Wert Eins der Variablen color werden Anweisungen im sogenannten else-Zweig beim Erzeugen eines sogenannten Maschinenprogramms 130 nicht berücksichtigt, d.h. im Ausführungsbeispiel die Anweisung:
drawCircle(x,y).

Wie in Figur 2 dargestellt, werden aufgrund der Auswahlanweisungen 100, 102, 104 und 106 in dieser Reihenfolge Maschinenbefehle 140, 142, 144 bzw. 146 erzeugt, mit denen jeweils ein Funktionsaufruf einer Funktion zum Zeichnen eines Kreises in der Farbe Blau verbunden ist. Die Befehle der Funktion befinden sich in einer Bibliothekseinheit 148, die mit Hilfe eines Link-Programms zu dem Objektcode hinzugelinkt wird, wobei das Maschinenprogramm 130 entsteht.

Als Alternative lassen sich die Befehle zum Zeichnen eines Kreises auch jeweils an Stelle der Maschinenbefehle 140 bis 146 in den Maschinencode 130 eingliedern. Dieses Vorgehen bietet sich insbesondere dann an, wenn die Anzahl der Befehle gering ist, beispielsweise weniger als zehn Befehle.

Hat die Auswahlvariable color dagegen den Wert Null, so werden in das Maschinenprogramm 130 an Stelle der Maschinenbefehle 140 bis 146 Befehle eingefügt, die eine Funktion aufrufen, die zur Schwarz-Weiß-Darstellung eines Kreises auf einer Anzeigeeinheit dient, z.B. auf der Anzeigeeinheit 22. Die Funktionsaufrufe sind in diesem Fall kürzer, weil ein Parameter zur Angabe der Farbe entfällt, z.B. der Parameter "Blue". Es wird dann an Stelle der Bibliothek 148 auch eine andere Bibliothek verwendet, die weniger Speicherplatz benötigt.

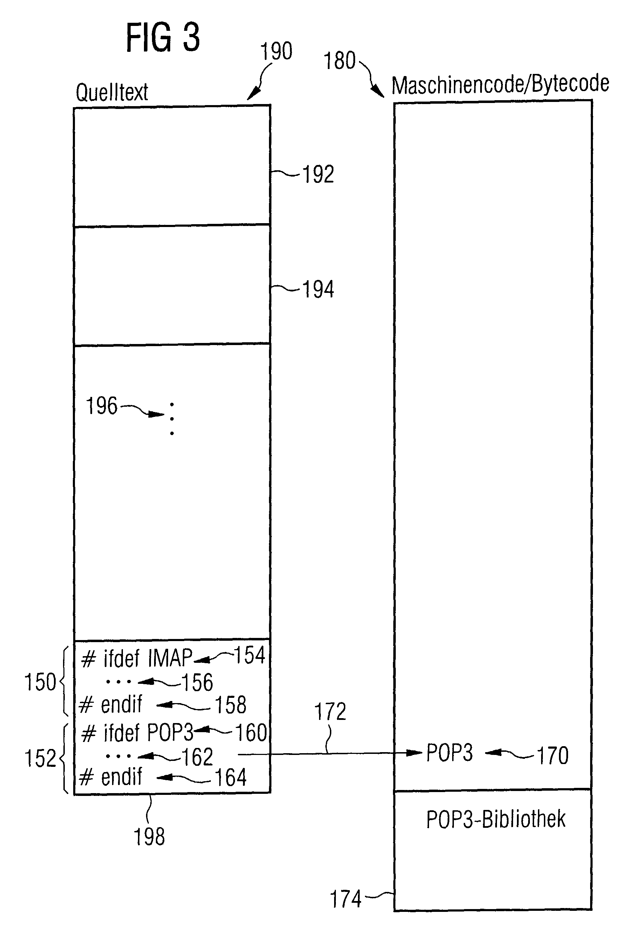

Figur 3 zeigt ein zweites Ausführungsbeispiel mit einer Auswahlanweisung 150 bzw. 152 je Auswahlmöglichkeit. Die Auswahlanweisung 150 enthält Quelltextzeilen 154, 156 und 158: 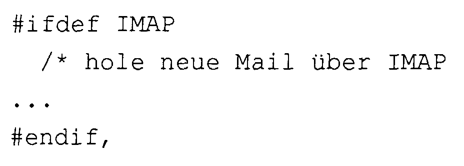 wobei IMAP die Abkürzung für das e-Mail-Übertragungsprotokoll Internet Mail Access Protocol ist und gleichzeitig eine Variable bezeichnet. Die drei Punkte deuten Quelltext-Befehle an, die ein Programm sind, mit dessen Hilfe die Funktionen des Protokolls IMAP erbracht werden, beispielsweise in der Version 4. Der Wert der Auswahlvariablen IMAP wird durch den Server 14 abhängig von einer Auswahl des Teilnehmers TlnA festgelegt. Wählt der Teilnehmer TlnA das Protokoll IMAP auf der WEB-Seite aus, so wird die Variable IMAP mit dem Wert Eins belegt. Ein Präprozessor würde dann die Quelltextbefehle 156 als gültig einstufen, so dass bei der Kompilierung aus diesen Quelltextbefehlen Maschinenbefehle erzeugt werden würden. Im Ausführungsbeispiel sei jedoch angenommen, dass der Teilnehmer TlnA das Protokoll IMAP nicht auswählt, so dass die Auswahlvariable IMAP mit dem Wert Null belegt wird. Bei der Kompilierung werden die Quelltextzeilen 156 nicht berücksichtigt. Weitere Auswahlanweisungen für die Auswahlvariable IMAP sind im Quelltext 190 nicht enthalten.

Die Auswahlanweisung 152 enthält Quelltextzeilen 160 bis 164: 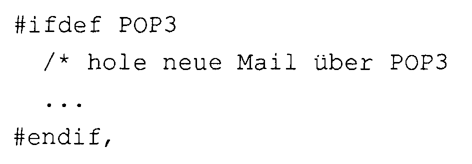 wobei POP3 die Abkürzung für das e-Mail-Übertragungsprotokoll Post Office Protocol 3 und gleichzeitig die Bezeichnung einer Auswahlvariablen ist. Der Wert der Auswahlvariablen POP3 wird vom Server 14 abhängig von der Auswahl des Teilnehmers TlnA vorgegeben. Wählt der Teilnehmer TlnA das Protokoll POP3 aus, so hat die gleichnamige Variable POP3 den Wert Eins. Wird das Protokoll POP3 dagegen nicht ausgewählt, so hat die gleichnamige Variable POP3 dagegen den Wert Null. Im Ausführungsbeispiel sei angenommen, dass der Teilnehmer TlnA das Protokoll POP3 ausgewählt hat. Die drei Punkte verdeutlichen Quelltextbefehle, mit deren Hilfe ein Verfahren zum Ausführen des Protokolls POP3 programmiert worden ist.

Vor dem Kompilieren bewertet ein sogenannter Präprozessor die Quelltextzeilen 162 als gültig. Deshalb wird beim Kompilieren aus den Quelltextzeilen 162 eine Anzahl von Maschinenbefehlen 170 erzeugt, welche die Funktionen des Protokolls bei ihrer Ausführung durch einen Prozessor erbringen können, siehe Pfeil 172. Beim Ausführen der Maschinenbefehle 170 werden auch Funktionen einer POP3-Bibliothek 174 aufgerufen, die durch einen Linker beim Erzeugen des Maschinencodeprogramms 180 aus dem Quelltext 190 eingebunden wird. Der Quelltext 190 enthält die enthält mehrere Quelltextdateien 192 bis 198. Die Auswahlanweisungen 150 und 152 sind in der letzten Quelltextdatei 198 enthalten.

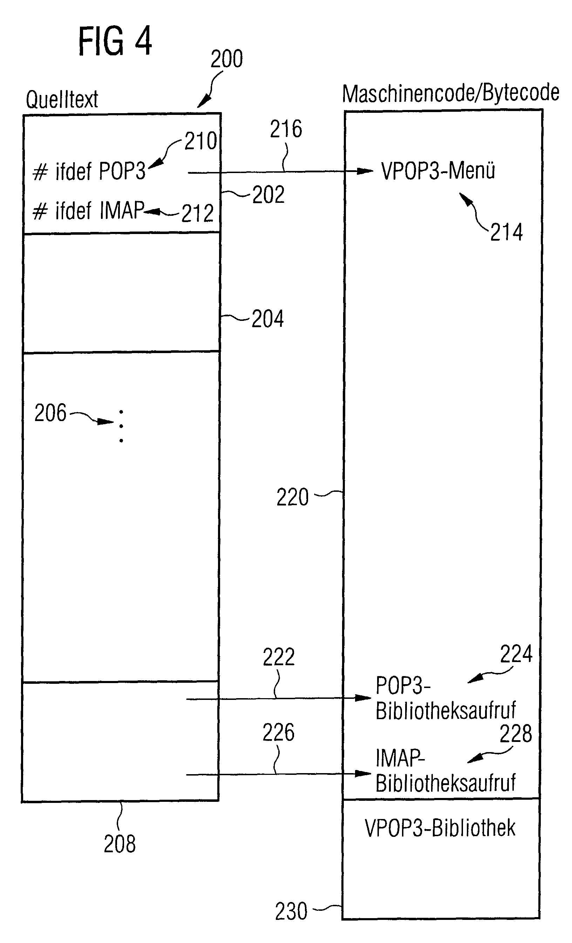

Figur 4 zeigt ein drittes Ausführungsbeispiel mit einer Bibliotheksauswahlfunktion. Ein Quelltext 200 enthält mehrere Quelltextdateien 202 bis 208. Die Quelltextdatei 202 enthält Befehle zum Erzeugen eines Menüs auf einer Anzeigeeinheit. In der Quelltextdatei 202 sind außerdem zwei Auswahlanweisungen 210 und 212 enthalten. Die Auswahlanweisung 210 enthält eine Auswahlvariable POP3 und schließt Quelltextzeilen ein, mit deren Hilfe in einem Auswahlmenü ein Menüpunkt zur Auswahl des Protokolls POP3 dargestellt werden kann. Der Wert der Auswahlvariable POP3 wird so vorgegeben, wie oben an Hand der Figur 3 erläutert. Im Ausführungsbeispiel sei angenommen, dass der Teilnehmer TlnA das Protokoll POP3 ausgewählt hat. Deshalb hat die Auswahlvariable POP3 den Wert Eins. Ein Präprozessor erklärt deshalb die durch Auswahlanweisung 210 eingeschlossenen Quelltextzeilen für gültig, so dass beim Kompilieren aus den eingeschlossenen Anweisungen Maschinenbefehle 224 zur Darstellung des Menüpunktes erzeugt werden, siehe Pfeil 216.

Die Auswahlanweisung 212 enthält eine Auswahlvariable IMAP und schließt Quelltextzeilen ein, die zur Darstellung eines Menüpunktes dienen, mit dessen Hilfe das Protokoll IMAP auf dem Endgerät 10 ausgewählt wird. Die Auswahlvariable IMAP wird so belegt, wie oben an Hand der Figur 3 erläutert. Im Ausführungsbeispiel sei angenommen, dass der Teilnehmer TlnA das Protokoll IMAP nicht ausgewählt hat, so dass die Auswahlvariable IMAP den Wert Null hat. Der Präprozessor erklärt deshalb die durch die Auswahlanweisung 212 eingeschlossenen Befehle des Quelltextes 200 für ungültig. Beim Kompilieren werden aus den durch die Auswahlanweisung 212 eingeschlossenen Quelltextzeilen keine Maschinenbefehle erzeugt. Damit fehlen in dem Maschinenprogramm 220 Maschinenbefehle, mit deren Hilfe sich der Menüpunkt darstellen lässt, der zur Auswahl des Protokolls IMAP dient. Der Teilnehmer TlnA kann also auf seinem Endgerät 10 diesen Menüpunkt nicht sehen und demzufolge auch nicht auswählen.

In der Quelldatei 208 befinden sich Quelltextzeilen, die sich sowohl auf das Protokoll POP3 als auch auf das Protokoll IMAP beziehen. Diese Quelltextzeilen sind jedoch nicht durch Auswahlanweisungen eingeschlossen, so dass sie bei der Kompilierung in Maschinenbefehle übersetzt werden, siehe Pfeil 222 für Maschinenbefehle 224 und Pfeil 226 für Maschinenbefehle 228. Die Maschinenbefehle 224 enthalten den Aufruf von Funktionen, die sich in einer Bibliothek 230 befinden. Die Bibliothek 230 enthält Funktionen zum Erbringen der im Protokoll POP3 vorgesehenen Verfahrensschritte. Die Bibliothek 230 wird beim Erzeugen des Maschinenprogramms 220 in einem Link-Verfahren eingebunden.

Die Maschinenbefehle 228 enthalten Aufrufe von Funktionen, die sich in einer IMAP-Bibliothek befinden, die in Figur 4 nicht dargestellt ist. Der Server 14 wählt aufgrund der Auswahl des Teilnehmers TlnA nur die POP3-Bibliothek 230, nicht dagegen die IMAP-Bibliothek für den Verknüpfungsprozess aus. Damit würde es beim Bearbeiten der Maschinenbefehle 228 zu einem Programmfehler kommen. Jedoch werden die Befehle 228 nicht ausgeführt, weil der Teilnehmer TlnA vorher im Menü die Auswahl für das Protokoll IMAP aktivieren müsste. Die Auswahl für das IMAP-Protokoll ist aber, wie oben erläutert, beim Ausführungsbeispiel gemäß Figur 4 nicht möglich.

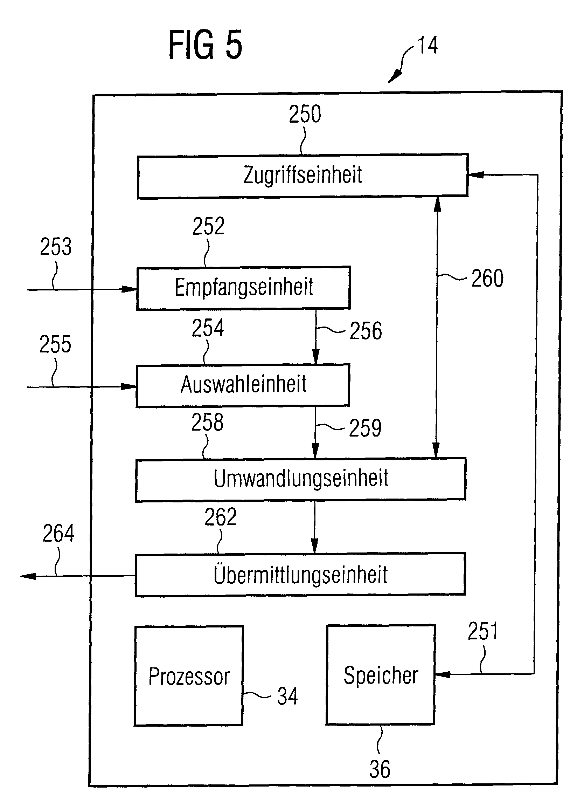

Figur 5 zeigt Funktionseinheiten des Servers 14, nämlich:
- eine Zugriffseinheit 250, die Zugriff auf die Quelltexte hat. Beispielsweise sind die Quelltexte im Speicher 36 gespeichert, siehe Pfeil 251,
- eine Empfangseinheit 252, die eine Anforderung des Teilnehmers TlnA zum Übermitteln eines Programms empfängt, siehe Pfeil 253,
- eine Auswahleinheit, mit deren Hilfe der Teilnehmer TlnA Leistungsmerkmale des Programms auswählt und Angaben zu seinem Endgerät 10 eingibt, siehe Pfeil 255. Dabei ist die Auswahl abhängig von dem zu übermittelnden Programm, siehe Pfeil 256,
- eine Umwandlungseinheit 258, mit deren Hilfe abhängig von der Auswahl die Quelltexte in ein Maschinenprogramm oder in einen Bytecode umgewandelt werden, siehe Pfeile 259 und 260,
- und eine Übermittlungseinheit 262, welche das Maschinenprogramm an den Teilnehmer TlnA übermittelt, siehe Pfeil 264.

Die Funktionen der genannten Einheiten 250, 252, 254, 258 und 262 lassen sich mit Hilfe eines Programms erbringen. Alternativ werden die Funktionen der genannten Einheiten durch Schaltungsanordnungen erbracht, die keine Programme enthalten. Auch Mischformen sind möglich. Die Funktionen der Einheiten 250 bis 262 lassen sich jedoch auch von Rechnern erbringen, die in einem Datenübertragungsnetz an verschiedenen Netzknoten angeordnet sind.

Bei einer Alternative wird das vom Teilnehmer TlnA ausgewählte Programm erst zu einem Rechner auf der Seite des Teilnehmers TlnA übertragen und von dort über eine Leitung oder über eine lokale Schnittstelle, z.B. eine Infrarot-Schnittstelle, zum Endgerät 10. Jedoch werden auch andere Übertragungswege eingesetzt, beispielsweise die Übertragung über SMS-Nachrichten (Short Message Service).

Anstelle eines Präprozessors wird bei einem anderen Ausführungsbeispiel ein Versionsmanagementprogramm oder ein ähnliches Softwarewerkzeug eingesetzt. Ein Versionsmanagementprogramm erlaubt es auf Dateiebene abhängig von Auswahlvariablen eine Auswahl zu treffen, bspw. für verschiedene Länderversionen eines Programms oder aber zur Erstellung eines nutzerspezifischen Programms.

Beispielsweise ist unter der Internetadresse www.aspectj.org ein Compiler beschrieben, der im Quelltext Auswahlbefehle zulässt, die ähnlich wie die oben erläuterten Präprozessoranweisungen wirken. Auch ein solcher Compiler lässt sich einsetzten, um ein nutzerspezifisches Programm zu erstellen.

Auch beliebige Kombinationen der erläuterten Ausführungsbeispiele beim Erstellen eines nutzerspezifischen Programms sind möglich.

## Patentansprüche

1. Verfahren zum Übermitteln eines Programms (130),
bei dem ein Diensterbringungsrechner (14) Zugriff zu dem Quelltext (108) mindestens eines Programms (130) hat,
bei dem ein Nutzer (TlnA) des Programms (130) an den Diensterbringungsrechner (14) eine Übermittlungsanforderung (50) zur Übermittlung des Programms (130) stellt,
bei dem zum Diensterbringungsrechner (14) mindestens eine Auswahlanforderung (50) zur Auswahl eines Leistungsmerkmals des Programms (130) und/oder zur Auswahl eines einzelnen Moduls des Programms (130) und/oder mindestens eine Geräteangabe zu dem Gerät (10) übermittelt wird, mit dessen Hilfe der Nutzer (TlnA) das Programm ausführt (130),
bei dem der Diensterbringungsrechner (14) den Quelltext (108) abhängig von der Auswahlanforderung (50) und/oder abhängig von der Geräteangabe in ein nutzerspezifisches Programm (130), das keinen Quelltext mehr enthält, umwandelt oder die Umwandlung veranlasst,
und bei dem das nutzerspezifische Programm (130) zum Gerät (10) des Nutzers (TlnA) übermittelt wird.

2. Verfahren nach Anspruch 1, **dadurch gekennzeichnet, dass** der Quelltext (108, 190) mindestens eine Auswahlanweisung (100, 150) enthält, die abhängig vom Wert einer Auswahlvariablen (color, IMAP) einen Teil des Quelltextes (108, 190) als gültig oder ungültig markiert,
dass abhängig von der Auswahlanforderung (50) oder der Geräteangabe ein Wert für die Auswahlvariable (color, IMAP) festgelegt wird,
dass beim Erzeugen des nutzerspezifischen Programms (130, 180) für einen gültigen Teil (162) des Quelltextes (190) mindestens ein Programmbefehl (170) des nutzerspezifischen Programms (180) erzeugt wird,
und dass beim Erzeugen des nutzerspezifischen Programms (130, 180) für einen ungültigen Teil (156) des Quelltextes (190) keine Programmbefehle des nutzerspezifischen Programms (180) erzeugt werden.

3. Verfahren nach Anspruch 2, **dadurch gekennzeichnet, dass** der Quelltext (190) für eine Auswahlmöglichkeit (150) oder für eine Geräteangabe eine einzige Auswahlanweisung (150) enthält.

4. Verfahren nach Anspruch 3, **dadurch gekennzeichnet, dass** der Wert einer Auswahlvariablen (POP3) ein elektronisches Verschlüsselungsverfahren oder ein Protokoll zum Übertragen von Nachrichten oder ein Datenformat für Nachrichten festlegt.

5. Verfahren nach Anspruch 4, **dadurch gekennzeichnet, dass** der Quelltext (108) für eine Auswahlmöglichkeit oder für eine Geräteangabe mehrere Auswahlanweisungen (100 bis 106) enthält.

6. Verfahren nach Anspruch 5, **dadurch gekennzeichnet, dass** der Wert der Auswahlvariablen (color) eine Gerätekomponente des Gerätes (10), vorzugsweise eine Ausgabeeinheit (22), oder eine Softwarekomponente bezeichnet, vorzugsweise einen Zeichensatz.

7. Verfahren nach einem der vorhergehenden Ansprüche, **dadurch gekennzeichnet, dass** abhängig von der Auswahlanforderung (50) und/oder abhängig von der Geräteangabe mindestens ein Programmmodul (230) zum Nutzer (TlnA) übertragen wird,
und/oder dass abhängig von der Auswahlanforderung und/oder der Geräteanforderung mindestens ein alternativ zu dem übertragenen Programmmodul (230) zu verwendendes Programmmodul nicht übermittelt wird.

8. Verfahren nach einem der vorhergehenden Ansprüche, **dadurch gekennzeichnet, dass** das nutzerspezifische Programm (180) ein Programmmodul (174) enthält, das eine Sammlung von Programmfunktionen enthält und das mit Hilfe einer Verknüpfungseinheit mit dem übrigen Teil des nutzerspezifischen Programms (180) verknüpft wird.

9. Verfahren nach einem der vorhergehenden Ansprüche, **dadurch gekennzeichnet, dass** der Quellcode (108, 190, 200) in einer klassischen Programmiersprache geschrieben ist, vorzugsweise in der Programmiersprache C, C++ oder in der Programmiersprache VisualBasic,
und dass das nutzerspezifische Programm (130) Befehle (140 bis 146) eines Befehlssatzes enthält, der von dem Typ des Prozessors abhängt, mit dem das nutzerspezifische Programm (130) ausgeführt wird.

10. Verfahren nach einem der Ansprüche 1 bis 8, **dadurch gekennzeichnet, dass** der Quelltext in einer Programmiersprache geschrieben ist, die eine Umwandlung in einen Zwischencode erlaubt, vorzugsweise in der Programmiersprache JAVA,
und dass das nutzerspezifische Programm Befehle gemäß Zwischencode enthält,
und dass die Befehle gemäß Zwischencode im Gerät (10) des Nutzers in Programmbefehle umgewandelt werden, die vom Typ des Prozessors abhängen, mit dem sie ausgeführt werden.

11. Verfahren nach einem der vorhergehenden Ansprüche, **dadurch gekennzeichnet, dass** das nutzerspezifische Programm (130) in einer Speichereinheit eines EndGerätes (10) eines Mobilfunknetzes (16) übermittelt wird,
und/oder dass das nutzerspezifische Programm (130) in einer Datenverarbeitungsanlage gespeichert wird, die keinen Magnetspeicher enthält.

12. Verfahren nach einem der vorhergehenden Ansprüche, **dadurch gekennzeichnet, dass** das Programm vor der Übermittlung automatisch optimiert wird, vorzugsweise bezüglich Speicherbedarf und/oder Übertragungskosten und/oder Leistungsfähigkeit.

13. Programm mit einer Befehlsfolge, bei deren Ausführung durch einen Prozessor (34) ein Verfahren nach einem der vorhergehenden Ansprüche ausgeführt wird.

14. Einheit (14) zum Übermitteln eines Programms (130),
mit einer Zugriffseinheit (250), die Zugriff auf die Quelltexte (108) mindestens eines Programms (130) hat,
mit einer Empfangseinheit für Anforderungen eines Nutzers (TlnA) des Programms (130) zur Übermittlung des Programms (130),
mit einer Auswahleinheit (254) zum Empfang einer Auswahlanforderung zur Auswahl eines Leistungsmerkmals des Programms (130) und/oder zur Auswahl eines einzelnen Moduls des Programms (130) und/oder mindestens einer Geräteangabe zu dem Gerät (10) des Nutzers (TlnA),
mit einer Umwandlungseinheit (258), die abhängig von der Auswahlanforderung (50) und/oder der Geräteangabe den Quelltext (108) in ein nutzerspezifisches Programm (130) umwandelt oder die Umwandlung veranlasst,
und mit einer Übermittlungseinheit (262), die das nutzerspezifische Programm (130) zum Gerät (10) des Nutzers (TlnA) übermittelt oder die Übermittlung veranlasst.

15. Vorrichtung nach Anspruch 14, **dadurch gekennzeichnet, dass** sie weitere Einheiten enthält, die die Durchführung eines Verfahrens nach einem der Ansprüche 2 bis 12 ermöglichen.
